# EUROPÄISCHE PATENTSCHRIFT

(11) **EP 1 378 765 B1**
(45) Veröffentlichungstag und Bekanntmachung des Hinweises auf die Patenterteilung: **24.02.2010**
(21) Anmeldenummer: 02014619.7
(22) Anmeldetag: 02.07.2002
(51) Int. Cl.: G01T 1/29

(54) **Vorrichtung und Verfahren zum Auslesen von in einer Speicherschicht abgespeicherter Information**
Method and device for reading out the information stored in a storage layer
Dispositif et procédé pour lire les informations contenues dans une couche mémoire

(43) Veröffentlichungstag der Anmeldung: 07.01.2004
(73) Patentinhaber: Agfa-Gevaert HealthCare GmbH, 50670 Köln (DE)
(72) Erfinder: Stahl, Werner, 85551 Heimstetten (DE)

(56) Entgegenhaltungen:
- EP-A- 0 287 117
- EP-A- 1 081 507
- DE-A- 19 752 925

## Beschreibung

Die vorliegende Erfindung betrifft eine Vorrichtung und ein Verfahren zum Auslesen von in einer Speicherschicht abgespeicherter Information nach dem Oberbegriff von Patentanspruch 1 bzw. Patentanspruch 7.

Eine derartige Vorrichtung und ein derartiges Verfahren sind bekannt aus der DE 197 52 925 A1. Dabei wird das Empfangsmittel auf eigens neben der Speicherschicht angebrachten Führungsschienen geführt.

Eine Vorrichtung und ein Verfahren zum Auslesen von in einer Speicherschicht abgespeicherter Information sind auch bekannt aus der EP 1 081 507 A2. Diese Druckschrift zeigt eine Vorrichtung, bei der die Empfangsvorrichtung über ein Luftlager, das sich auf der Speicherschicht abstützt, relativ zur Speicherschicht gelagert ist. Der Abstand zwischen der Empfangsvorrichtung und der Speicherschicht soll innerhalb geringer Toleranzen konstant gehalten werden. Dies soll durch einen gleichmäßigen Luftdruck zwischen Luftlager und Speicherschicht gewährleistet werden. Solche Luftlager lassen sich im Hinblick auf den geringen Luftspalt, der in einer Größenordnung von ca. 2 µm liegt, schwerlich entlang der Speicherschicht verschiebbar ausbilden, um somit ein optimales Auslesen von Information zu ermöglichen.

Aus EP 0 287 117 A1 ist eine Vorrichtung bekannt, bei der sich die Speicherschicht auf einer Auflage befindet, welche in zwei seitlichen Führungsnuten geführt wird.

Der vorliegenden Erfindung liegt die Aufgabe zu Grunde, eine Vorrichtung und ein Verfahren der eingangs genannten Art derart weiterzubilden, dass eine Speicherschicht mit gutem Ergebnis ausgelesen werden kann.

Diese Aufgabe wird gelöst durch eine Vorrichtung mit den Merkmalen von Patentanspruch 1 sowie durch ein Verfahren mit den Merkmalen von Patentanspruch 6.

Der Erfindung liegt die Erkenntnis zugrunde, dass die obige Aufgabe gelöst wird, wenn als Führungsfläche zum Führen der Empfangsvorrichtung oder der Speicherschicht beim Auslesen der Speicherschicht eine solche Führungsfläche gewählt wird, deren Niveau in Richtung senkrecht zur Ebene, die durch die Ablagefläche aufgespannt wird, möglichst exakt mit dem Niveau der Ablagefläche für die Speicherschicht in Richtung senkrecht zur Ebene der Ablagefläche übereinstimmt. Dies gilt vorteilhafterweise für den gesamten Verlauf der Führungsfläche in Vorschubrichtung (x-Richtung). Der Verlauf der Empfangsvorrichtung oder der Speicherschicht beim Auslesen der Speicherschicht entspricht daher - zumindest in diese Richtung senkrecht zur Ebene, die durch die Ablagefläche aufgespannt wird, betrachtet - genau dem Verlauf der auf der Ablagefläche aufliegenden Speicherschicht in Richtung senkrecht zur Ebene der Ablagefläche. Dadurch kann vorteilhafterweise ein über den gesamten Verlauf der Speicherschicht gleicher Abstand zwischen Empfangsvorrichtung und Speicherschicht, und damit eine gute Bildschärfe gewährleistet werden.

Erfindungsgemäß ist das Lager als Luftlager ausgebildet, das derart angeordnet ist, dass im Betrieb der Vorrichtung ein Luftspalt zwischen dem Lager und der Führungsfläche ausgebildet ist Erfindungsgemäße Vorrichtungen werden beispielsweise als digitale Röntgenscanner eingesetzt, welche sehr hohe Ansprüche an die Konstanz der Geschwindigkeit stellen, mit der die Speicherschicht während des Auslesevorgangs ausgelesen wird. Bei üblicherweise verwendeten Gleitlagern wird der Gleichlauf aufgrund des nicht vollständig zu verhindernden Reibungseffektes gestört. Auch alle Arten von Wälzlagern sind nicht rückwirkungsfrei.

Die erfindungsgemäße Lösung resultiert weiterhin in dem Vorteil, dass die Führungsfläche im Hinblick auf eine Verwendung von Luftlagern optimiert ist. Wie sich nämlich in der Praxis gezeigt hat, ist z. B. die Oberfläche der Speicherschichten, beispielsweise Phosphor, nur bedingt geeignet, Luftlager darauf abzustützen. Dies liegt an der Rauhigkeit einer derartigen Oberfläche im Hinblick auf die bei Luftlagern zu fordernde extreme Glätte. Um dies zu verstehen, muss man sich vor Augen halten, dass der Luftspalt besonders bevorzugt zwischen 1 µm und 4 µm beträgt, wobei bereits ein Keilspalt von 2 µm zu Mischreibung führen kann, das heißt, das Lager könnte kratzen. Durch Verwendung einer Führungsfläche, die nicht die Speicherschicht darstellt, aus Glas kann diese extrem glatt ausgebildet werden. Damit lassen sich für die Abstützung der Empfangsvorrichtung problemlos Luftlager einsetzen, die in weiteren Vorteilen resultieren.

Besonders bevorzugt kommen als Führungsflächen in Betracht die Ablagefläche selbst, auf die die Speicherschicht zumindest während des Auslesens abgelegt ist, insbesondere - in Vorschubrichtung betrachtet - Randbereiche der Ablagefläche, oder Führungsschienen, entlang der die Empfangsvorrichtung oder die Speicherschicht zumindest während der Ausführung der Relativbewegung geführt wird. Dabei sind diese Führungsschienen in Richtung senkrecht zur Ebene, die durch die Ablagefläche aufgespannt wird, exakt an den Verlauf der Ablagefläche für die Speicherschicht angepasst. Damit ergibt sich eine sehr gute Genauigkeit beim Führen.

Vorteilhafterweise sind zwei Führungsflächen vorhanden, die beidseitig der Ablagefläche angeordnet sind. Dadurch läßt sich das Führen besonders genau durchführen.

In einer besonders vorteilhaften Ausführung sind die zwei Führungsflächen direkt mit der Ablagefläche verbunden, insbesondere integral. Dadurch kann die Übereinstimmung im Verlauf auf technisch einfache Weise realisiert und eine besonders gute Übereinstimmung erzielt werden.

Bevorzugt umfasst die Lagervorrichtung mindestens zwei Luftlager. Die mindestens zwei Luftlager bilden ein Lagerpaar und sind in z-Richtung, d. h. in Richtung senkrecht zur Ausbreitung der Ablagefläche, beidseits der Ablagefläche angeordnet. Dadurch, dass zwei Luftlager im Sinne von Lager und Gegenlager zusammenwirken, kann erreicht werden, dass die Empfangsvorrichtung sicher nahezu ohne Reibung entlang der Führungsfläche geführt wird.

Ein besonders präziser Transport der Empfangsvorrichtung oder der Speicherschicht läßt sich realisieren, wenn der Luftspalt eines Luftlagers zwischen 1 und 5 µm, insbesondere 2 µm beträgt.

Weitere vorteilhafte Ausführungsformen ergeben sich aus den Unteransprüchen.

Im Nachfolgenden werden Ausführungsbeispiele der Erfindung unter Bezugnahme auf die Zeichnungen beschrieben.

Es zeigen:
- Fig. 1: in schematischer perspektivischer Darstellung eine erste Ausführungsform einer erfindungsgemäßen Vorrichtung zum Auslesen von in einer Speicherschicht abgespeicherter Information;
- Fig. 2a - 2c: eine zweite Ausführungsform einer erfindungsgemäßen Vorrichtung nach sukzessivem Abbau von Teilen der erfindungsgemäßen Vorrichtung;
- Fig. 3a - 3d: eine mit der Darstellung von Figur 2b korrespondierende Darstellung der Lagerung der Empfangsvorrichtung, wobei aus den Darstellungen der Figur 3b - 3d Details deutlich zu erkennen sind;
- Fig. 4: die Darstellung von Figur 3a in teilweise geschnittener Darstellung in Frontansicht;
- Fig. 5a, b: eine detailliertere Darstellung von Einzelheiten der Figur 3b;
- Fig. 6: eine detaillierte Darstellung eines bevorzugt verwendeten Luftlagers;
- Fig. 7a, b: in Seitenansicht und perspektivischer Darstellung einen bevorzugt bei der erfindungsgemäßen Vorrichtung zu verwendenden Präzisionstaster;
- Fig. 8: in detaillierter Darstellung eine bevorzugt verwendbare Verstelleinheit; und
- Fig. 9: in schematischer Darstellung das durch die Verwendung von Luftlagern ermöglichte Pendeln der Empfangsvorrichtung, beispielhaft gezeigt am Pendeln um die z-Achse.

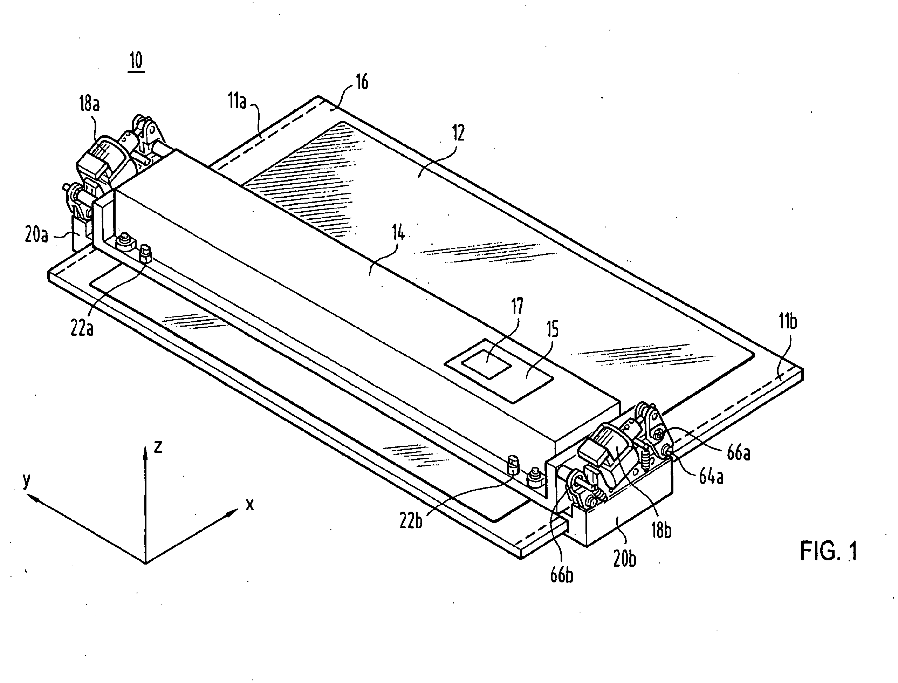

Figur 1 zeigt einen digitalen Scanner 10 für Röntgenanwendungen als erfindungsgemäße Vorrichtung zum Auslesen von in einer Speicherschicht 12, die auf einer Ablagefläche 16 angeordnet ist, abgespeicherter Information. Die Ablagefläche 16 spannt eine x-y-Ebene auf. Eine z-Richtung verläuft senkrecht zu dieser x-y-Ebene. Der Scanner 10 umfasst einen Abtastkopf 14, in dem eine Empfangsvorrichtung zum Empfangen einer von der Speicherschicht 12 ausgesandten Emissionsstrahlung angeordnet ist. Die Empfangsvorrichtung kann eine CCD-Zeile mit vorgeschalteten Abbildungsoptiken enthalten. Eine Strahlungsquelle zum Aussenden von einer Anregungsstrahlung ist ebenfalls in dem Abtastkopf 14 angeordnet, oder bei einem Durchlichtscanner unterhalb der Ablagefläche 16. Die Strahlungsquelle kann eine Vielzahl von nebeneinander angeordneten Laserdioden aufweisen, deren Strahlungen über Optiken auf die Speicherschicht 12 geführt werden, wobei eine Zeile der Speicherschicht 12 anregbar ist. Der Abtastkopf 14 ist über eine erste und eine zweite Verstelleinheit 18a, 18b mit einer ersten und einer zweiten Lagervorrichtung 20a, 20b verbunden, mit denen der Abtastkopf 14 auf der Ablagefläche 16 geführt wird. Die beiden Lagervorrichtungen 20a, 20b sind dabei in zwei Randbereichen 11a und 11b der Ablagefläche 16 angeordnet. Dadurch ist gewährleistet, dass der Verlauf der Randbereiche 11a, 11b in z-Richtung exakt mit dem Verlauf der Ablagefläche 16 übereinstimmt. Das jeweilige Niveau in z-Richtung der Randbereiche 11a, 11b stimmt mit dem Niveau in z-Richtung der Ablagefläche 16 überein. Während eines Auslesevorgangs wird der Abtastkopf 14 in x-Richtung über die Speicherschicht 12 geführt, angetrieben von einer nicht dargestellten Antriebsvorrichtung. Die Ablagefläche 16 ist hier vorteilhafterweise aus Glas gefertigt. Die Oberfläche von Glas kann besonders glatt gefertigt werden und gewährleistet somit eine besonders exakte Führung des Abtastkopfes 14. Fig. 1 zeigt weiterhin ein Steuermittel 15 das zum Steuern des Auslesens der Speicherschicht 12 mittels des Scanners 10 dient. Das Steuermittel 15 ist hier auf dem Abtastkopf 14 angebracht und enthält einen Speicher 17, in dem verschiedene für das Auslesen benötigte Informationen abgespeichert sind und auf den das Steuermittel 15 bei Bedarf zugreifen kann. Auf die Bedeutung eines ersten und zweiten Präzisionstasters 22a, 22b wird weiter unten detaillierter eingegangen werden. Dabei ist es allerdings möglich, statt zweier Präzisionstaster auch nur einen einzigen einzusetzen.

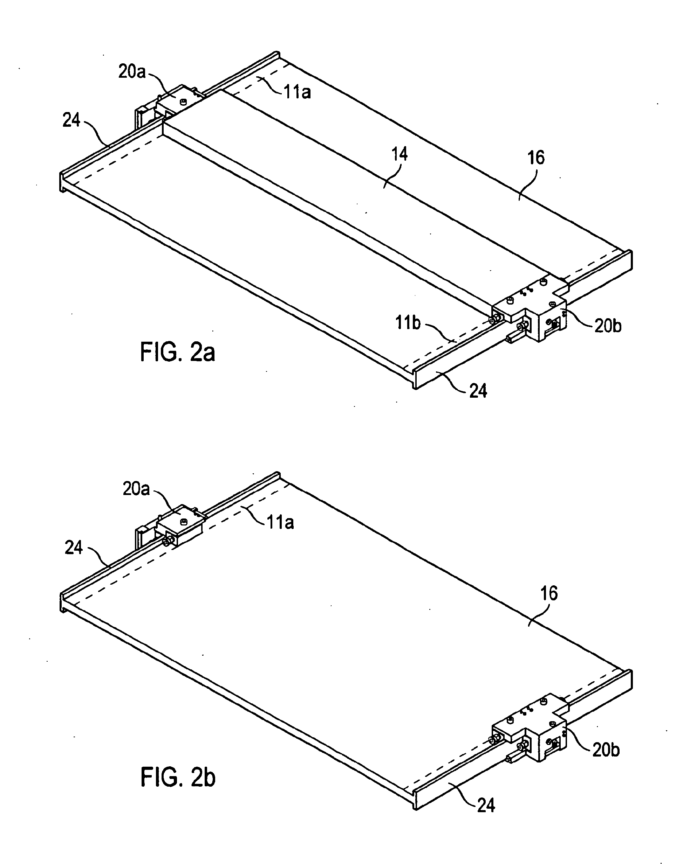

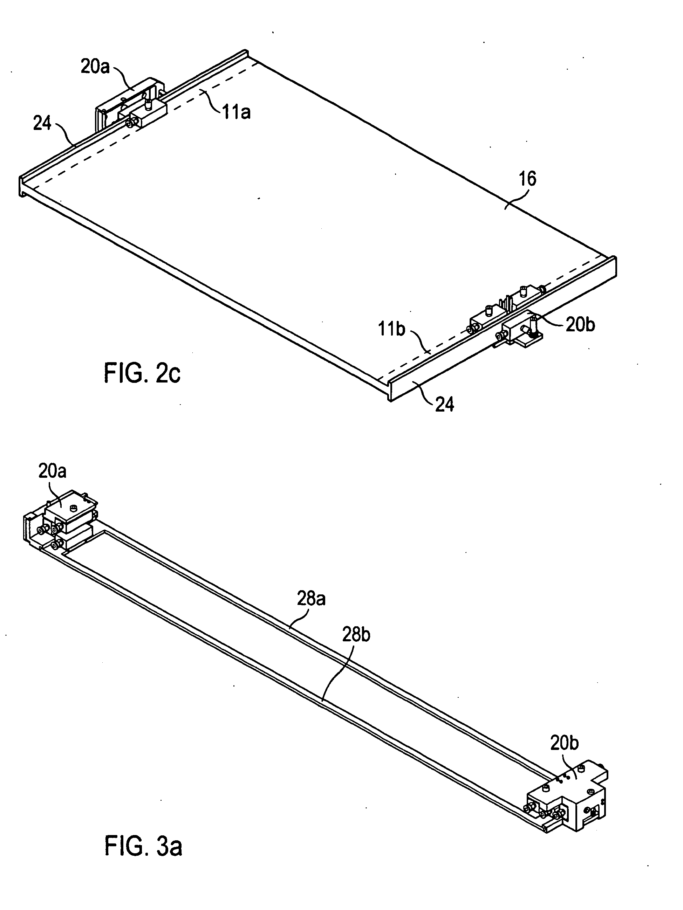

Die Figuren 2a bis 2c zeigen einen Aufbau der erfindungsgemäßen Vorrichtung, bei der die Ablagefläche 16 an den beiden Endseiten in y-Richtung zur besonders einfachen Lagerung und Führung des Abtastkopfs 14 gegenüber der Ablagefläche 16 ausgeprägte Randabschlüsse 24 aufweist. Diese Randabschlüsse 24 dienen der Führung des Abtastkopfes 14 in y-Richtung. Figur 2a zeigt den Abtastkopf 14 nach Abnahme seiner Abdeckkappe. Die Verstelleinheiten 18a, 18b wurden ebenfalls entfernt und sind somit nicht dargestellt. Figur 2b zeigt die Anordnung von Figur 2a ohne Abtastkopf 14, während Figur 2c die Anordnung von Figur 2b zeigt, wobei die Gehäuseabdeckungen der linken und der rechten Lagervorrichtung 20a, 20b entfernt wurden.

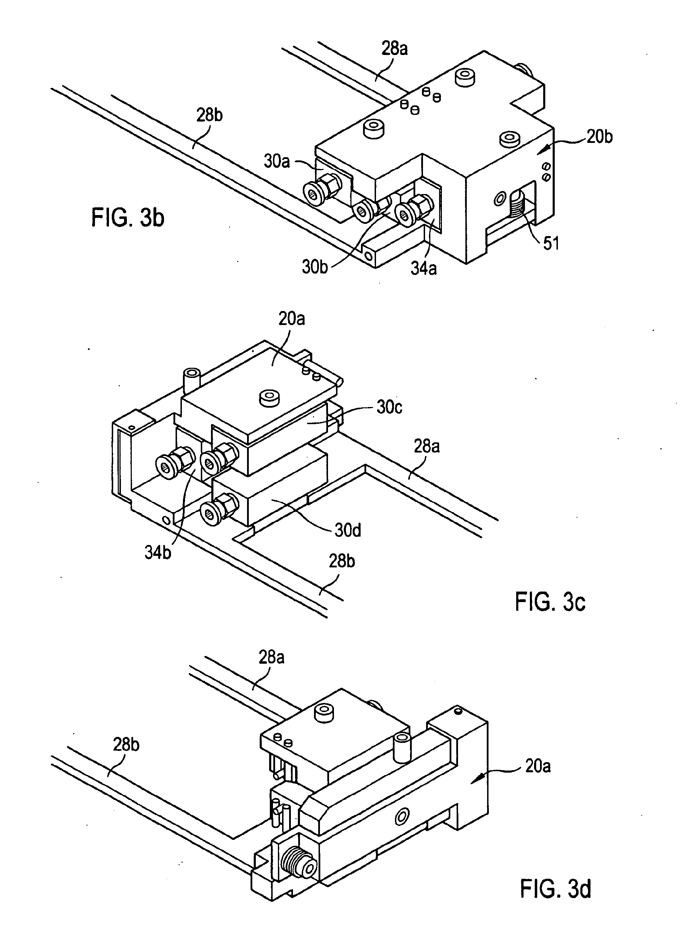

Figur 3a korrespondiert mit der Darstellung von Figur 2b, wobei jedoch die Ablagefläche 16 in der Darstellung entfernt wurde. Zu erkennen ist, dass die linke und die rechte Lagervorrichtung 20a, 20b über zwei Stege 28a, 28b miteinander verbunden sind. Figur 3b zeigt die rechte Lagervorrichtung 20b und Figur 3c die linke Lagervorrichtung 20a von Figur 3a detaillierter. Die rückwärtige Ansicht der linken Lagervorrichtung 20a ist in Figur 3d dargestellt.

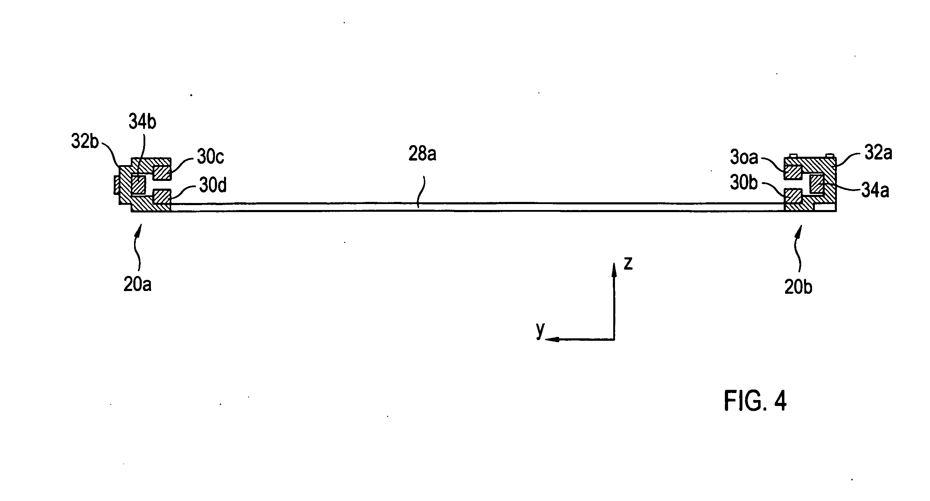

Figur 4 zeigt schematisch eine teilweise geschnittene Frontansicht der Darstellung von Figur 3a, aus der erkennbar ist, dass die Lagervorrichtungen 20a und 20b über zwei in z-Achsenrichtung zusammenwirkende Luftlager 30a, 30b bzw. 30c, 30d verfügen. Über eine Verbindung 32a der rechten Lagervorrichtung 20b sind deren Luftlager 30a, 30b und über eine Verbindung 32b der linken Lagervorrichtung 20a sind deren Luftlager 30c, 30d in z-Achsenrichtung federnd gegeneinander vorgespannt. Kräfte zur Erzeugung der Vorspannungen können beispielsweise mittels Tellerfedern realisiert werden, die auf die Verbindungen 32a und 32b wirken. Der im Betrieb durch die Luftlager jeweils erzeugte Luftdruck bildet Gegenkräfte zu den von den Tellerfedern erzeugten Kräften. In y-Richtung wirken zwei Luftlager 34a, 34b im Sinne eines Lagers und eines Gegenlagers zusammen. Die Luftlager 34a, 34b in y-Richtung sind ebenfalls federnd gegeneinander vorgespannt. Die Ablagefläche 16, auf die sich die verschiedenen Luftlager abstützen, ist durch die Luftlagerpaare quasi wie zwischen einer Zange eingespannt.

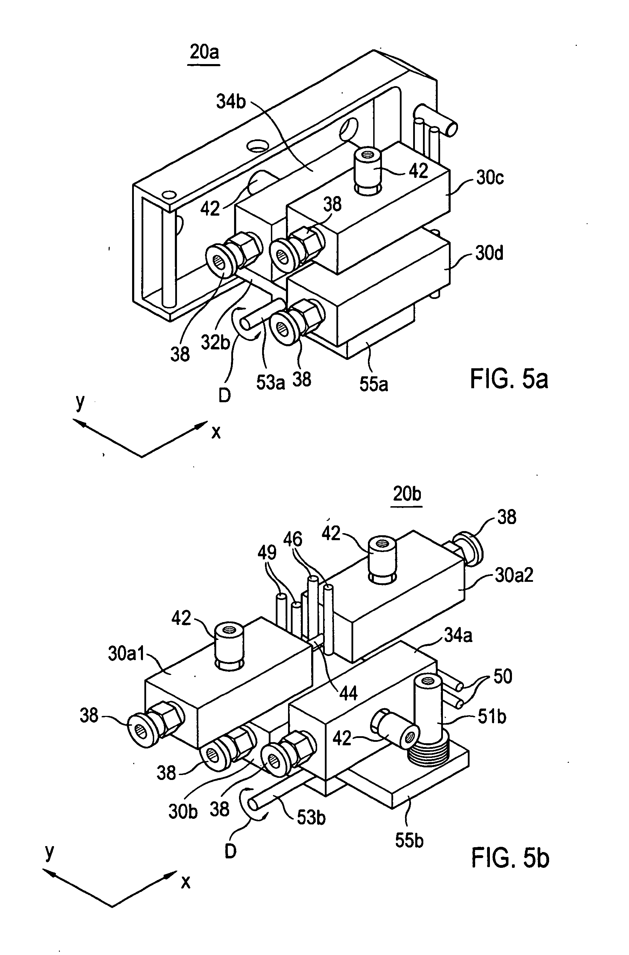

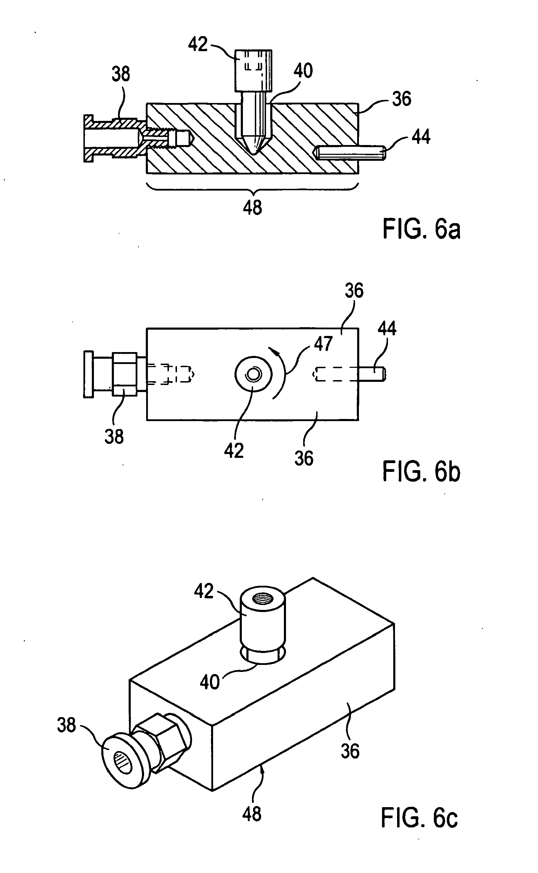

Figur 5a zeigt die Luftlager 30c, 30d und 34b der linken Lagervorrichtung 20a, Figur 5b die Luftlager 30a1, 30a2, 30b und 34a der rechten Lagervorrichtung 20b mit größerer Genauigkeit. Eines der verwendeten Luftlager ist stellvertretend in den Figuren 6a bis c dargestellt und , ohne Spezifikation seiner Einbaustelle in einer der Lagervorrichtungen 20a, 20b, allgemein mit der Bezugsziffer 36 bezeichnet. Das Luftlager 36 umfasst einen Luftanschluss 38 sowie eine Lagerung 40, in der beispielhaft zur Erzielung einer punktförmigen Lagerung eine Kegelschraube 42 angeordnet ist, die mit der zugehörigen Gehäuseabdeckung der jeweiligen Lagervorrichtung 20a, 20b und damit dem zu lagernden Abtastkopf 14 starr zu verbinden ist. Dazu ist in den Kopf der Kegelschraube 42 ein Gewinde eingebracht. Durch die punktförmige Lagerung über die Spitze der Kegelschraube 42 wird ein selbstjustierendes Lager realisiert.

Figur 6b zeigt eine Draufsicht des Luftlagers 36. In dem Luftlager 36 ist eine Verdrehsicherung 44 angeordnet, um zu verhindern, dass das Luftlager 36 in der in Figur 6b mit einem Pfeil 47 gekennzeichneten Richtung rotiert. Die Luftauslassseite des Luftlagers 36 ist mit dem Bezugszeichen 48 gekennzeichnet. Sie enthält Luftausströmöffnungen, durch die über den Luftanschluss 38 in das Lager eingeführte Luft ausgeblasen wird.

Zurück zur Darstellung in Figur 5b: Zu erkennen ist, dass das obere Luftlager 30a (siehe Figur 4) hier zwei Luftlager 30a1, 30a2 umfasst, die in x-Richtung nebeneinander angeordnet sind. Dadurch wird sichergestellt, dass der Abtastkopf 14 während der Aktivierung der Luftlager nicht um die y-Achse kippt. Der oben allgemein beschriebenen Verdrehsicherung 44 entsprechen hier Verdrehsicherungen 46 für das Luftlager 30a2, Verdrehsicherungen 49 für das Luftlager 30a1 und Verdrehsicherungen 50 für das Luftlager 34a. Die Verdrehsicherungen 46, 49, 50 sind an ihren in der Fig. 5b dargestellten jeweiligen Enden mit der nicht dargestellten Gehäuseabdeckung der Lagervorrichtung 20b befestigt. Die Kegelschrauben 42 der Figuren 5a, 5b werden über die Verbindungen 32a, 32b, mit der Lager und Gegenlager miteinander verbunden sind, mit dem Abtastkopf 14 verbunden.

Die Fig. 5b zeigt des Weiteren eine Tellerfeder 51b, die zur Erzeugung einer Kraft zur Realisierung einer Vorspannung des Luftlagerpaares 30a1, 30a2 und 30b in z-Richtung dient. Die Tellerfeder 51b ist an ihrer Oberseite mit einem Gewinde versehen, über das die Tellerfeder 51b an der Gehäuseabdeckung der Lagervorrichtung 20b befestigt werden kann (siehe auch Darstellung in Fig. 3b). Die von der Tellerfeder 51b erzeugte Kraft wird hier über eine Verbindungsplatte 55b auf das Luftlager 30b übertragen, das mit der Verbindungsplatte 55b verbunden ist. Die Verbindungsplatte 55b ist dabei mit einer in x-Richtung verlaufenden Drehachse 53b verbunden, die ein Verkippen der Verbindungsplatte 55b und damit des Luftlagers 30b entlang einer Drehrichtung D ermöglicht. Die Drehachse 53b ist an ihren beiden Enden in dem (nicht dargestellten) Gehäuse der Lagervorrichtung 20b befestigt. Die von den Luftlagern 30a1, 30a2 und 30b im Betrieb erzeugten Luftdrücke bilden eine Gegenkraft zu der durch die Tellerfeder 51b erzeugten Kraft. Dadurch entsteht die zangenförmige Lagerung der Ablagefläche 16, die sich zwischen den Lagern 30a1, 30a2 und 30b befindet. Eine der Tellerfeder 51b entsprechende weitere Tellerfeder (nicht dargestellt), eine Verbindungsplatte 55a sowie eine Drehachse 53a sind für die Lagervorrichtung 20a vorgesehen, um auch da die zangenförmige Lagerung der Ablagefläche 16 zu gewährleisten.

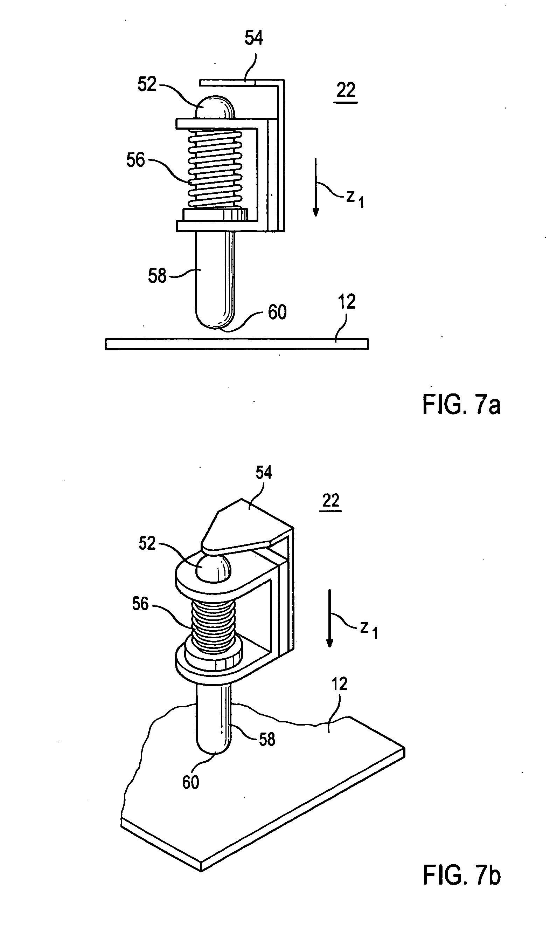

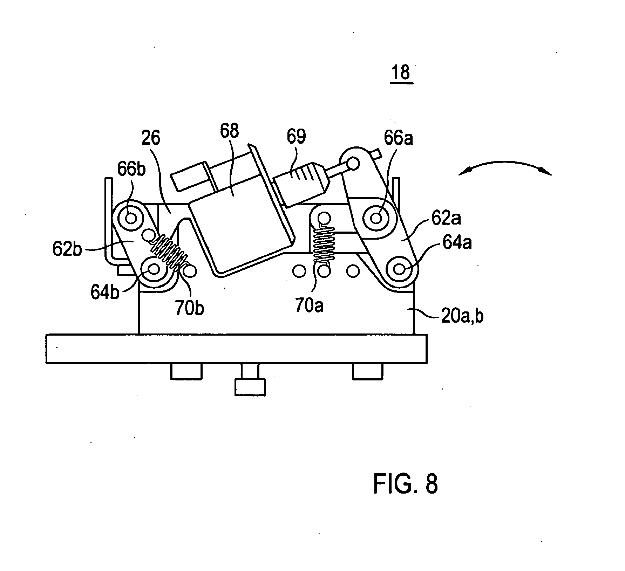

Figuren 7a und 7b zeigen eine Ausführungsform eines bereits in Figur 1 dargestellten Präzisionstasters 22. Der Präzisionstaster 22 ist mit dem Abtastkopf 14 ortsfest verbunden, wobei vorteilhafterweise vorgesehen sein kann, dass der Präzisionstaster in y-Richtung verschiebbar angeordnet ist. Zur Normierung des Abstands zwischen der Speicherschicht 12 und der im Abtastkopf 14 enthaltenen Empfangsvorrichtung wird der Abtastkopf 14, der mit dem Präzisionstaster 22 verbunden ist, soweit in z₁-Richtung, d. h. in Richtung der Speicherschicht 12, abgesenkt, bis eine Oberseite 52 eines Kontaktstifts 58 mit einer Kontaktfeder 54 in Kontakt tritt. In diesem Fall ist eine Unterseite 60 des Kontaktstifts 58 mit der Speicherschicht 12 in Kontakt. Eine Feder 56 sorgt dafür, dass ohne entsprechenden Druck auf die Unterseite 60 des Kontaktstifts 58, d. h. ohne Widerstand durch die Speicherschicht 12, die Oberseite 52 des Kontaktstifts 58 und die Kontaktfeder 54 nicht in Kontakt sind. Nach einer derart durchgeführten Normierung wird mittels der in Figur 8 dargestellten Verstelleinheit 18 ein optimaler Abstand zwischen Speicherschicht 12 und Empfangsvorrichtung des Abtastkopfes 14 eingestellt, indem der Abtastkopf 14 nach Berühren der Kontaktfeder 54 durch die Oberseite 52 des Kontaktstifts 58 um den optimalen Abstand in entgegengesetzter z₁-Richtung zurückgefahren wird. Dadurch ergibt sich zwischen der Unterseite 60 des Kontaktstiftes 58 und der Speicherschicht 12 ein Abstand. Das Einstellen des optimalen Abstands wird einfachheitshalber durch das Steuermittel 15 (Fig. 1) gesteuert. Der optimale Abstand kann durch eine zuvor durchgeführte Kalibrierung des Scanners ermittelt worden sein. Durch den optimalen Abstand wird insbesondere gewährleistet, dass die Bildschärfe beim Auslesen der Speicherschicht 12 sehr gut und möglichst über die gesamte Fläche der Speicherschicht 12 gleich ist.

Mit Bezug auf Figur 8 umfasst die Verstelleinheit 18 zwei parallel geführte Stangen 62a, 62b, die einerseits über Lager 64a, 64b mit einer der Lagervorrichtungen 20a, 20b, andererseits über Lager 66a, 66b an den Abtastkopf 14 gekoppelt sind. Durch einen Schrittmotor 68 mit integrierter Spindel 69 kann die Stange 62a ausgelenkt werden, wobei diese Bewegung als korrespondierende Auslenkung auf die Stange 62b übertragen wird. Damit lässt sich der Abstand zwischen Speicherschicht 12 und Empfangsvorrichtung, d. h. Abtastkopf 14, hochpräzise einstellen. Federn 70a, 70b sorgen für eine möglichst spielfreie Verspannung der Verstelleinheit 18.

Eine derartige Abstandseinstellung kann für verschiedene Speicherschichten jeweils vor Beginn eines Auslesevorgangs erfolgen, wobei während des Auslesevorgangs der Abstand vorteilhafterweise beibehalten wird. Dies verbessert die Auslesequalität, da verschiedene Speicherschichten produktionsbedingt insbesondere verschiedene Dicken haben, so dass bei unterschiedlichen Speicherschichten 12 unterschiedliche Abstände zwischen der Oberfläche der jeweiligen Speicherschicht 12 und der in dem Abtastkopf 14 enthaltenen Empfangsvorrichtung vorliegen würden. Der Abstand kann während eines Auslesevorgangs vorteilhafterweise nachgeregelt werden. Dies erfolgt einfachheitshalber mittels des Steuermittels 15. Insbesondere für die Realisierung der letztgenannten Variante ist es von Vorteil, wenn der Abstand während eines Abtastvorgangs kontinuierlich bestimmt wird. Dazu eignet sich beispielsweise eine mechanische Abtastung durch ein Messrad, das mit minimaler Auflagekraft auf der Oberfläche der Speicherschicht 12 während des Abtastvorgangs mitläuft und das Niveau der Speicherschicht auf ein Messsystem überträgt. Alternativ kann auch eine berührungslose Abstandsmessung verwendet werden, wobei jedoch darauf zu achten ist, dass dadurch die Speicherschicht nicht zur Emission von Strahlung angeregt wird.

Es kann vorgesehen sein, dass für wiederholte Auslesevorgänge der selben Speicherschicht 12 das Ergebnis der vorher durchgeführten Normierung, beziehungsweise der Abstandsmessung, in einem Speicher 17 (siehe Fig. 1) abgelegt und der Speicherschicht zugeordnet wird. Besonders vorteilhaft lässt sich dies realisieren, wenn die Speicherschicht 12 in einer Kassette gelagert wird und diese Kassette über einen derartigen Speicher verfügt. Die Kassette wird zum Auslesen der in ihr enthaltenen Speicherschicht 12 in den erfindungsgemäßen Scanner eingeführt und die Speicherschicht 12 anschließend aus der Kassette heraus- und in den Scanner hineingezogen. Eine Übertragung des in dem Speicher abgelegten Ergebnisses der zuvor durchgeführten Abstandsmessung oder Normierung kann einfachheitshalber durch einen Transponder auf die erfindungsgemäße Vorrichtung zum Auslesen der Information aus der Speicherschicht übertragen werden. Es ist aber auch möglich, das Ergebnis der zuvor durchgeführten Abstandsmessung oder der Normierung nach der Durchführung in dem Speicher 17 des Scanners abzuspeichern. Nach einem erneuten Erkennen der zugeordneten Speicherschicht kann der abgespeicherte Abstand des Abtastkopfes 14 zu der Ablagefläche 16 abgerufen und eingestellt werden.

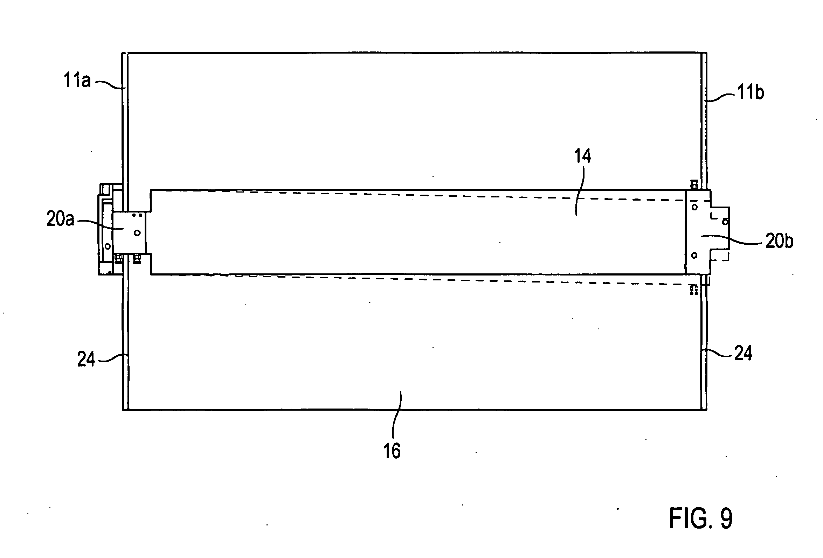

Figur 9 zeigt, dass durch die Verwendung von Luftlagern ein Pendeln des Abtastkopfes 14 um die z-Achse ermöglicht wird, ohne dass es zu einem Slip-Stick-Effekt kommt. Dadurch ist die erfindungsgemäße Vorrichtung besonders auch für einen beidseitigen Antrieb der Empfangsvorrichtung 26 geeignet.

Die erfindungsgemäße Vorrichtung ist sowohl bei Varianten einsetzbar, bei denen die Speicherschicht 12 und die Ablagefläche 16 fest in der Vorrichtung montiert sind. Sie ist auch einsetzbar bei einer Variante, bei der die Speicherschicht 16, gegebenenfalls aufgebracht auf einer zusätzlichen Trägerschicht, beispielsweise aus Aluminium, lediglich zum Auslesen der Speicherschicht 12 in die Vorrichtung eingeführt wird.

Für den Fall, dass über einen der Speicherschicht zugeordneten Transponder signalisiert wird, dass für die entsprechende Speicherschicht noch keine Normierung beziehungsweise Abstandsmessung vorgenommen wurde, kann vorgesehen sein, dass dies automatisch von der erfindungsgemäßen Auslesevorrichtung initiiert wird.

## Patentansprüche

1. Vorrichtung zum Auslesen von in einer Speicherschicht (12) abgespeicherter Information mit
- einer Empfangsvorrichtung (14) zum Empfangen einer von der Speicherschicht (12) ausgesandten Emissionsstrahlung;
- einer Ablagefläche (16) zum Ablegen der Speicherschicht (12), wobei durch die Ablagefläche (16) eine x-y-Ebene definiert ist; und
- einem Führungsmittel (20a, 20b) zum Führen der Empfangsvorrichtung (14) oder der Speicherschicht (12) auf einer Führungsfläche (11a, 11b, 16) während des Erzeugens einer Relativbewegung zwischen der Empfängsvorrichtung (14) und der Speicher schicht (12) in x-Richtung, wobei die Führungsfläche (11a, 11b, 16) von der Speicherschicht (12) unabhängig ist;
**dadurch gekennzeichnet, dass**
- das Niveau der Führungsfläche (11a, 11b, 16) in eine z-Richtung, die senkrecht zur x-y-Ebene verläuft, mit dem Niveau der Ablagefläche (16) in z-Richtung übereinstimmt,
- die Führungsfläche (11a, 11b, 16) eine Glasoberfläche aufweist und
- das Führungsmittel (20a, 20b) ein als Luftlager (36) ausgebildetes Lager (20) zum Lagern der Empfangsvorrichtung (14) aufweist.

2. Vorrichtung nach Anspruch 1,
**dadurch gekennzeichnet,**
**dass** die Führungsfläche (11a, 11b, 16) zwei Teilführungsflächen (11a, 11 b) aufweist, die in y-Richtung beidseitig der Ablagefläche (16) angeordnet sind.

3. Vorrichtung nach Anspruch 2,
**dadurch gekennzeichnet,**
**dass** die Teilführungsflächen (11a, 11b) mit der Ablagefläche (16) verbunden sind.

4. Vorrichtung nach Anspruch 3,
**dadurch gekennzeichnet,**
**dass** die Teilführungsflächen (11a, 11b) mit der Ablagefläche (16) integral verbunden sind.

5. Vorrichtung nach einem der vorhergehenden Ansprüche,
**dadurch gekennzeichnet,**
**dass** das Lager (20) mindestens zwei Luftlager (36) umfaßt, die ein Lagerpaar bilden und in eine z-Richtung, die senkrecht zu der durch die Ablagefläche definierten xy-Ebene verläuft, beidseits der Führungsfläche (11a, 11 b, 16) angeordnet sind.

6. Verfahren zum Auslesen von in einer Speicherschicht (12) abgespeicherter Information unter Verwendung einer Empfangsvorrichtung (14) zum Empfangen von Emissionsstrahlung, die von der Speicherschicht (12) ausgegeben wurde, wobei sich die Speicherschicht (12) auf einer Ablagefläche (16) befindet, durch die eine x-y-Ebene definiert wird, folgende Schritte umfassend:
a) Empfangen einer von der Speicherschicht (12) ausgesandten Emissionsstrahlung;
b) Erzeugen einer Relativbewegung zwischen der Empfangsvorrichtung (14) und der Speicherschicht (12) in x-Richtung; und
c) Führen der Empfangsvorrichtung (14) oder der Speicherschicht (12) während des Erzeugens der Relativbewegung mittels eines Führungsmittels (20a, 20b) auf einer Führungsfläche (11a, 11b, 16), die von der Speicherschicht (12) unabhängig ist;
**dadurch gekennzeichnet, dass**
beim Führen der Empfangsvorrichtung (14) das Niveau der Führungsfläche (11a, 11b, 16) in eine z-Richtung, die senkrecht zur x-y-Ebene verläuft, mit dem Niveau der Ablagefläche (16) in z-Richtung übereinstimmt, wobei die Empfangsvorrichtung (14) mittels eines Luftlagers (36) auf einer Glasoberfläche gelagert und auf dieser geführt wird.

## Claims

1. An apparatus for reading out information stored in a storage layer (12) having
- a receiving device (14) for receiving emission radiation emitted by the storage layer (12);
- a setting down surface (16) for setting down the storage layer (12), an x-y plane being defined by the setting down surface (16); and
- a guide means (20a, 20b) for guiding the receiving device (14) or the storage layer (12) over a guide surface (11 a, 11 b, 16) during the production of a relative movement between the receiving device (14) and the storage layer (12) in the x direction, the guide surface (11 a, 11 b, 16) being independent of the storage layer (12);
**characterised in that**
- the level of the guide surface (11 a, 11 b, 16) in a z direction, which extends perpendicularly to the x-y plane, corresponds to the level of the setting down surface (16) in the z direction,
- the guide surface (11 a, 11 b, 16) has a glass surface, and
- the guide means (20a, 20b) has a bearing (20) in the form of an air bearing (36) in order to support the receiving device (14).

2. The apparatus according to Claim 1,
**characterised in that**
the guide surface (11 a, 11 b, 16) has two partial guide surfaces (11 a, 11 b) which in the y direction are disposed on both sides of the setting down surface (16).

3. The apparatus according to Claim 2,
**characterised in that**
the partial guide surfaces (11 a, 11 b) are connected to the setting down surface (16).

4. The apparatus according to Claim 3,
**characterised in that**
the partial guide surfaces (11 a, 11 b) are connected integrally to the setting down surface (16).

5. The apparatus according to any of the preceding claims,
**characterised in that**
the bearing (20) comprises at least two air bearings (36) which form a bearing pair and in a z direction, which extends perpendicularly to the x-y plane defined by the setting down surface, are disposed on both sides of the guide surface (11a, 11 b, 16).

6. A method for reading out information stored in a storage layer (12) by using a receiving device (14) for receiving emission radiation which has been emitted by the storage layer (12), the storage layer (12) being located on a setting down surface (16) by means of which an x-y plane is defined, comprising the following steps:
a) receiving emission radiation emitted by the storage layer (12);
b) producing a relative movement between the receiving device (14) and the storage layer (12) in the x direction; and
c) guiding the receiving device (14) or the storage layer (12) during the production of the relative movement by means of a guide means (20a, 20b) over a guide surface (11 a, 11 b, 16) which is independent of the storage layer (12);
**characterised in that**
when guiding the receiving device (14) the level of the guide surface (11a, 11 b, 16) in a z direction, which extends perpendicularly to the x-y plane, corresponds to the level of the setting down surface (16) in the z direction, the receiving device (14) being supported by means of an air bearing (36) on a glass surface and being guided over the latter.

## Revendications

1. Dispositif de lecture d'une information mémorisée dans une couche d'enregistrement (12), comportant
- un dispositif de réception (14) destiné à recevoir un rayonnement d'émission émis par la couche d'enregistrement (12) ;
- une surface de dépôt (16) servant au dépôt de la couche d'enregistrement (12), ladite surface de dépôt (16) définissant un plan X-Y ; et
- un moyen de guidage (20a, 20b) servant à guider le dispositif de réception (14) ou la couche d'enregistrement (12) sur une surface de guidage (11a, 11 b, 16) au cours de la production d'un déplacement relatif entre le dispositif de réception (14) et la couche d'enregistrement (12) dans la direction X, la surface de guidage (11 a, 11 b, 16) étant indépendante de la couche d'enregistrement (12) ;
**caractérisé en ce que**
- le niveau de la surface de guidage (11 a, 11 b, 16), dans une direction Z perpendiculaire au plan X-Y, coïncide avec le niveau de la surface de dépôt (16) dans la direction Z,
- la surface de guidage (11 a, 11 b, 16) présente une surface de verre et
- le moyen de guidage (20a, 20b) présente un palier (20) réalisé sous la forme d'un palier à air (36) sur lequel est monté le dispositif de réception (14).

2. Dispositif selon la revendication 1,
**caractérisé en ce que** la surface de guidage (11 a, 11 b, 16) présente deux surfaces de guidage partielles (11 a, 11 b) placées, dans la direction Y, des deux côtés de la surface de dépôt (16).

3. Dispositif selon la revendication 2,
**caractérisé en ce que** les surfaces de guidage partielles (11 a, 11 b) sont raccordées à la surface de dépôt (16).

4. Dispositif selon la revendication 3,
**caractérisé en ce que** les surfaces de guidage partielles (11 a, 11 b) sont raccordées d'un seul tenant à la surface de dépôt (16).

5. Dispositif selon l'une des revendications précédentes,
**caractérisé en ce que** le palier (20) comprend au moins deux paliers à air (36) qui forment une paire de paliers et qui sont disposés, dans une direction Z perpendiculaire au plan X-Y défini par la surface de dépôt, des deux côtés de la surface de guidage (11 a, 11 b, 16).

6. Procédé de lecture d'une information mémorisée dans une couche d'enregistrement (12) mettant en oeuvre un dispositif de réception (14) destiné à recevoir un rayonnement d'émission ayant été émis par la couche d'enregistrement (12), la couche d'enregistrement (12) se trouvant sur une surface de dépôt (16) définissant un plan X-Y, ledit procédé comprenant les étapes suivantes consistant à:
a) recevoir un rayonnement d'émission émis par la couche d'enregistrement (12) ;
b) produire un déplacement relatif entre le dispositif de réception (14) et la couche d'enregistrement (12) dans la direction X ; et
c) guider le dispositif de réception (14) ou la couche d'enregistrement (12) au cours de la production du déplacement relatif grâce à un moyen de guidage (20a, 20b) sur une surface de guidage (11 a, 11b, 16) indépendante de la couche d'enregistrement (12) ;
**caractérisé en ce que**
lors du guidage du dispositif de réception (14), le niveau de la surface de guidage (11a, 11 b, 16) dans une direction Z perpendiculaire au plan X-Y coïncide avec le niveau de la surface de dépôt (16) dans la direction Z, le dispositif de réception (14) étant monté, par l'intermédiaire d'un palier à air (36), sur une surface de verre et guidé sur celle-ci.
